# DEMANDE DE BREVET EUROPEEN

(11) **EP 2 849 448 A1**
(43) Date de publication de la demande: **18.03.2015**
(21) Numéro de dépôt: 13186380.5
(22) Date de dépôt: 27.09.2013
(51) Int. Cl.: H04N 21/258, H04N 21/266, H04N 21/41, H04N 21/414, H04N 21/418, H04N 21/422, H04N 21/4223, H04N 21/45, H04N 21/4623, H04N 21/4627

(54) **Méthode pour contrôler l'accès à du contenu diffusé**

(30) Priorité: 13.09.2013 US 201361877297 P
(71) Demandeur: Nagravision S.A., 1033 Cheseaux-sur-Lausanne (CH)
(72) Inventeur: Servignat, David, 1033 Cheseaux-sur-Lausanne (CH); Pont, José-Emmanuel, 1033 Cheseaux-sur-Lausanne (CH); Tomas, Frédéric, 1213 Onex (CH); Jantz, Scott, Gainesville, FL Florida 32653 (US); Livay, Nir, Gainesville, FL Florida 32653 (US)
(74) Mandataire: Leman Consulting S.A.

(57) **Abrégé**

La présente invention concerne le domaine du contrôle de l'accès à du contenu audiovisuel diffusé à un récepteur, en particulier le contrôle portant sur la localisation du récepteur.

La présente invention propose une Méthode de control d'accès à du contenu diffusé à un récepteur, ledit récepteur faisant partie d'un système de contrôle géographique d'accès comprenant des moyens de vérification et des moyens de sécurité, la méthode comprenant les étapes :
- acquérir une localisation courante par un dispositif portable,
- transférer la localisation courante aux moyens de vérification,
- extraire dans une mémoire des moyens de vérification, un set de données de localisation définissant au moins une zone,
- vérification par les moyens de vérification que la localisation courante est incluse dans ladite zone, et dans l'affirmative, transmission d'un message d'autorisation de réception du contenu audiovisuel aux moyens de sécurité relatif au récepteur.

## Description

### Introduction

La présente invention concerne le domaine du contrôle de l'accès à du contenu audiovisuel diffusé à un récepteur, en particulier le contrôle portant sur la localisation du récepteur.

### Etat de la technique

Il existe plusieurs applications qui requièrent la géo-localisation d'un récepteur dans le domaine de la diffusion de contenu audiovisuel. Une première raison est la fonction de blackout qui consiste à empêcher les récepteurs dans une certaines régions d'accéder au contenu. Cette fonction a été introduite par les organisateurs d'événements sportifs afin d'interdire l'accès à l'événement aux récepteurs se trouvant dans la même région que l'événement. Ceci pour inciter les personnes intéressées à venir voir l'événement plutôt que de le consommer derrière un écran de télévision.

Une seconde raison est la fonction "account packing" c'est-à-dire la proposition d'un deuxième ou troisième récepteurs de contenu à prix réduit. La condition est que ces récepteurs restent dans le même foyer pour bénéficier de la réduction. Il est tentant de prendre un deuxième récepteur à prix réduit et de l'installer chez une connaissance. La connaissance de la position des récepteurs permet de vérifier si la condition de proximité des récepteurs est respectée.

Une troisième raison qui est proche de la fonction "blackout" est la gestion des droits de diffusion par territoire. Un opérateur acquiert les droits de diffusion pour un territoire donné. Néanmoins, un signal diffusé ne peut suivre des frontières arbitraires et le signal déborde de la zone d'autorisation. L'opérateur est alors invité, pour se conformer à ses obligations légales, de mettre des moyens techniques en place pour éviter que les récepteurs hors de sa zone puissent accéder au contenu.

C'est pourquoi il a été proposé selon l'état de la technique (par exemple US 6'317'500), d'intégrer un système de géo-localisation dans les récepteurs afin de contrôler l'accès aux contenus.

Le défaut de ces systèmes est que la réception des satellites de géo-localisation n'est en général pas possible à l'intérieur des maisons ou appartements. Le but de la présente invention est d'apporter une solution à ce problème.

### Brève description de l'invention

Dans le cadre de la présente invention, il est proposé une méthode de control d'accès à du contenu diffusé à un récepteur, ledit récepteur faisant partie d'un système de contrôle géographique d'accès comprenant des moyens de vérification et des moyens de sécurité, la méthode comprenant les étapes :
- acquérir une localisation courante par un dispositif portable,
- transférer la localisation courante aux moyens de vérification,
- extraire dans une mémoire des moyens de vérification, un set de données de localisation définissant au moins une zone,
- vérification par les moyens de vérification que la localisation courante est incluse dans ladite zone, et dans l'affirmative, transmission d'un message d'autorisation de réception du contenu audiovisuel aux moyens de sécurité relatif au récepteur.

La particularité d'un contenu diffusé est qu'il est envoyé à une pluralité de récepteurs sans que l'émetteur puisse avoir un contrôle sur le récepteur, comme c'est le cas dans une connexion point-à-point. Ce type de diffusion peut se faire par ondes hertzienne, par câble, par satellites ou par diffusion IP (broadcast over IP).

La particularité de cette méthode est d'utiliser des moyens de localisation existants d'un dispositif portable tel d'un téléphone intelligent pour compléter les fonctionnalités du récepteur. Selon un autre mode de réalisation, le dispositif portable est la télécommande du récepteur dans laquelle des fonctions de localisation (tel qu'un GPS) sont intégrées. La localisation acquise par la télécommande est transmise au récepteur.

La localisation n'est pas limitée aux données GPS mais peut être également obtenue par la réception d'identifiants d'antenne de téléphonie mobile ou de diffusion de type broadcast avec identifiant de l'émetteur. L'identifiant d'une telle antenne est donc une "localisation" dans le sens de la présente invention. Les moyens de localisation englobe l'acquisition de coordonnées GPS, l'acquisition d'un identifiant de réseau mobile ou de diffusion locale.

Les moyens de vérification peuvent être intégrés dans le récepteur ou faire partie d'un centre de gestion. Dans le premier cas, les moyens de vérification ainsi que les moyens de sécurité peuvent être un seul élément de sécurité placé dans le récepteur. Dans le second cas, les moyens de vérification du centre de gestion interagissent avec les moyens de sécurité du récepteur pour autoriser/interdire l'accès au contenu.

Comme il a été dit plus haut, le dispositif portable comprend des moyens de localisation.

Il y a deux types de dispositif portable, le premier type disposant de moyens propres de communication avec le centre de gestion et le second type dans possibilité de communiquer.

La télécommande fait partie de la deuxième catégorie et va communiquer la localisation acquise directement au récepteur. A cet effet le dispositif portable dispose de moyens locaux de communications avec le récepteur, ceux-ci pouvant être la communication infrarouge de la télécommande, une liaison selon de protocole NFC ou Bluetooth.

Dans le cas du premier type, la communication de la localisation peut être aussi faite directement au récepteur par des moyens de communication local (NFC, Bluetooth) ou être adressée au centre de gestion.

Selon un mode de réalisation préféré, la communication entre le dispositif portable et le récepteur est sécurisée. Ceci signifie que seul un dispositif portable connu du récepteur peut dialoguer avec lui.

Afin d'assurer ce but, les données échangées entre le dispositif portable et le récepteur sont encryptée par une clé partagée par le dispositif portable et le récepteur.

Dans le cas de la télécommande, cette clé peut être chargée dans les deux entités lors de l'initialisation et aucun réglage n'est à faire par la suite. Dans le cas d'un téléphone intelligent, une opération d'initialisation est à faire par l'utilisateur avant de pouvoir autoriser le dialogue avec le récepteur. Cette initialisation permet de charger la clé de transmission dans le téléphone intelligent correspondant au récepteur.

Le récepteur reçoit un message du centre de gestion du parc de récepteur contenant une instruction de vérification de localisation. Ce message, transmis par les moyens de diffusion ou via un canal dédicacé, peut être adressé à un récepteur, un groupe de récepteur ou l'ensemble de récepteur.

Le message peut contenir la zone d'autorisation pour le récepteur ou le groupe de récepteurs, ou simplement contenir une commande de vérification. Dans ce dernier cas, la zone d'autorisation a été mémorisée dans le récepteur, soit à l'initialisation précédant la mise en service, soit grâce à un message de configuration (EMM) envoyé au récepteur ou au groupe de récepteurs. Dans le cas d'un message adressé globalement, si le message contient la zone d'autorisation, cette zone définit toute la zone d'activité de l'opérateur.

Une fois le message reçu par le récepteur, un message est affiché sur l'écran de visualisation invitant l'utilisateur à acquérir une géo-localisation et la transmettre au récepteur. La commande de ce message est enregistrée dans des moyens de sécurité du récepteur.

L'utilisateur va donc utiliser le dispositif portable pour acquérir sa position. Dans le cas de la télécommande, un bouton déclenche la recherche de la localisation (par exemple la recherche des satellites de géo-localisation) et l'utilisateur pourra se placer près d'une fenêtre pour avoir une bonne réception.

Une fois la position acquise, le dispositif portable, selon un mode de réalisation, est placé près du récepteur et la transmission des données peut se faire. Le récepteur extrait des données une localisation et des données de contrôle. Les données de contrôle servent à s'assurer que la localisation vient de s'effectuer en vérifiant par exemple la date attachée aux données.

Dans le mode ou le dispositif portable dispose de moyens de communication avec le centre de gestion, ces données de localisation sont transmises au centre de gestion qui dispose de deux options, soit exécuter directement la vérification pour s'assurer que la localisation est dans la zone autorisée (les moyens de vérification sont donc au centre de gestion), soit transmettre dans un message personnel (EMM) cette localisation au récepteur pour qu'il effectue la vérification (les moyens de vérification sont donc dans le récepteur).

### Brève description des figures

La présente demande sera mieux comprise grâce à la description détaillée basée sur les figures :
- figure 1 illustre le système de l'invention,
- figure 2 illustre l'opération de communication entre un téléphone intelligent et un centre de gestion,
- figure 3 illustre l'échange de données utilisant la technique du SMS,
- figure 4 illustre les éléments dans l'échange de données utilisant la technique du SMS,

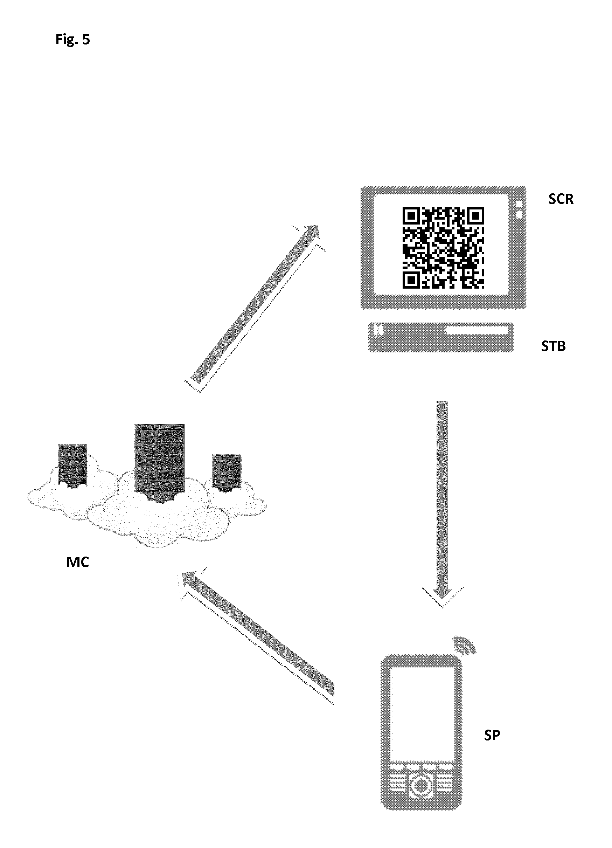

- figure 5 illustre l'affichage d'un code d'identification sur l'écran du récepteur.

### Description détaillée

Plusieurs modes de réalisation sont proposés dans la cadre de la présente demande. Les points communs sont :
- un récepteur STB reçoit des données diffusées pour lesquels l'on souhaite contrôler géographiquement l'accès,
- un écran SCR est connecté au récepteur et permet d'afficher les données diffusées ainsi que des messages de contrôle,
- un dispositif portable qui n'est pas connecté de manière permanente au récepteur, permet d'acquérir une localisation. Cette localisation peut être une géo-localisation (GPS) ou la réception d'un identifiant transmis par une antenne locale. Cette antenne peut être une antenne de téléphonie mobile (GSM) ou une antenne de diffusion de type DVB-H.
- des moyens de vérification, qui contiennent une ou plusieurs localisations de référence et qui permettent de vérifier si la localisation courante, tel qu'acquise par le dispositif portable, est dans une zone d'autorisation. Ces données de référence peuvent être propres à un utilisateur, un groupe d'utilisateur ou tous les récepteurs d'un opérateur.
- une transmission par le dispositif portable de la localisation acquise vers les moyens de vérification pour effectuer la vérification décrite ci-dessus,
- des moyens de sécurité, liés au récepteur, pour autoriser ou interdire l'accès aux données diffusées,
- un message d'invitation comprenant une commande, diffusé par le centre de gestion, demandant à l'utilisateur sa coopération pour la vérification de la localisation. Cette commande déclenche un message, affiché sur l'écran SRC, qui informe l'utilisateur des opérations à effectuer.

Le récepteur STB de l'utilisateur comprend des moyens de réception d'un flux de données audiovisuelles diffusées. Plusieurs types de réception peuvent être supportés par le récepteur comme la réception par câble, par satellite, par voie hertzienne ou par flux IP. Tous ces flux ont en commun le fait que le même flux est diffusé à de nombreux récepteurs et c'est pourquoi la mise en oeuvre de la vérification d'autorisation d'accès se fait au niveau du récepteur. A cet effet, le récepteur dispose de moyens de sécurité qui peuvent être de plusieurs formes :
- un circuit dédicacé, monté sur le circuit imprimé du récepteur et qui effectue toutes les opérations de sécurité. Ce circuit contient une mémoire sécurisée qui conserve les clés et les droits de l'utilisateur.
- une zone silicium d'un circuit spécialisé. Le circuit spécialisé intègre toutes les fonctions du récepteur, notamment la sélection d'un flux parmi plusieurs flux, la séparation des flux audio et vidéo, la décompression et la gestion de l'affichage. Une section de ce circuit est réservée aux opérations de sécurité et contient une mémoire sécurisée conservant les données propre à un utilisateur.
- un module indépendant, tel qu'un dongle ou une carte à puce comprenant des moyens de traitement et au moins une mémoire sécurisée. Ce module est connecté par exemple par un connecteur USB ou ISO 7816. Le récepteur filtre les messages de gestion du système de contrôle d'accès et les envoie au module indépendant. Ce dernier les traite et renvoie les clés ou informations utiles au fonctionnement du récepteur.
- un module logiciel. L'unité centrale du récepteur peut traiter plusieurs contextes et la fonction de sécurité est un logiciel qui est exécuté par la même unité centrale que la gestion du récepteur. Une section spéciale de la mémoire est réservée à ce programme et l'accès aux autres programmes tournant sur le récepteur est limité.

Un récepteur est identifié par un numéro unique UA. Ce numéro est stocké de préférence dans une mémoire de manière permanente du récepteur afin de ne pas pouvoir être modifié sans autorisation. Ce numéro n'est pas secret et il est en général imprimé au dos du récepteur.

Selon une forme particulière, le récepteur est un module qui vient se connecter dans un connecteur de l'écran. Une forme connue est le module PCMCIA mais d'autres type de connexion (tel que USB, Firewire) sont possibles. Dans ce cas, l'alimentation est fournie par l'écran et le dialogue avec l'utilisateur transite par le connecteur et utilise les moyens (télécommande) de l'écran. Ces modules sont connus sous l'appellation CAM (Conditional Access Module).

### Premier mode de réalisation

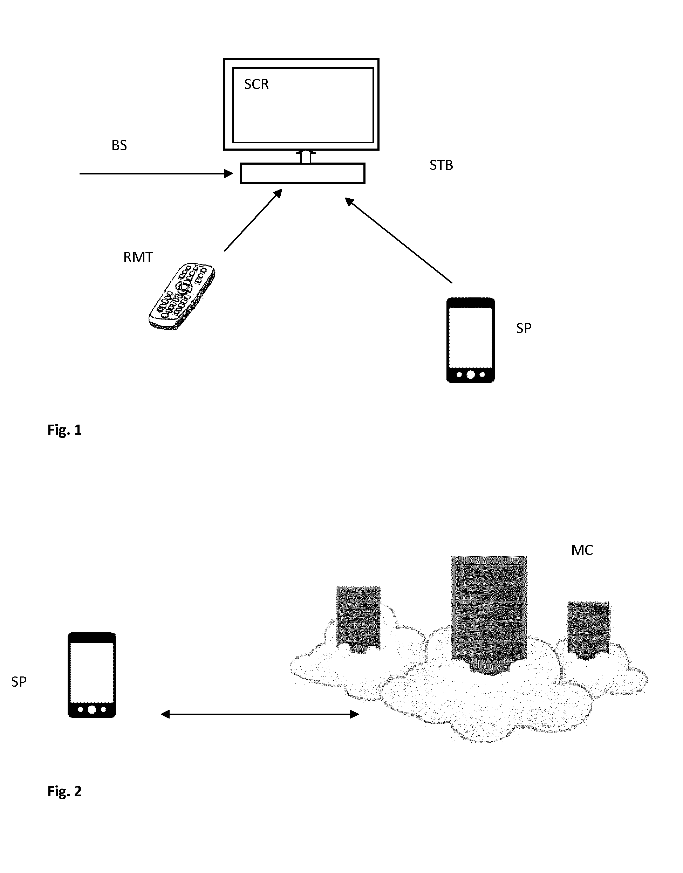

Ce premier mode est **caractérisé en ce que** la localisation courante, acquise par le dispositif portable, est transmise au récepteur. Elle est illustrée par les figures 1 et 2. Le dispositif local peut être la télécommande RMT du récepteur (ou de l'écran SCR dans le cas du module CAM) et la communication peut simplement être la liaison infrarouge. La télécommande peut disposer d'un autre canal de communication tel que bluetooth ou NFC. Une fois la localisation acquise et temporairement mémorisée dans la télécommande, l'utilisateur s'approche du récepteur et lance le transfert ce cette localisation vers le récepteur STB. Afin de sécuriser cette localisation, les données envoyées par la télécommande sont encryptées par une clé préalablement chargée dans le récepteur et la télécommande. Ainsi, on crée un couple et une autre télécommande ne peut être utilisée à cet effet. Selon au autre mode de réalisation, qui peut compléter le mode précédent (l'encryption) la télécommande dispose d'un générateur aléatoire ou d'un compteur dont le résultat est une valeur de contrôle et qui est transmis avec la localisation. Ceci a pour effet que chaque transmission de la localisation est accompagnée d'une donnée qui change et qu'il n'est donc pas possible de répéter la transmission sans être détecté par le récepteur. Dans ce mode, le récepteur conserve le ou les dernières valeurs de contrôle afin de vérifier si les données courantes sont "fraîches" c'est-à-dire qu'elles n'ont pas déjà été transmises.

Dans le mode utilisant un téléphone intelligent SP, le principe est le même à savoir que ce dernier, acquiert la localisation courante (soit par GPS, par un identifiant d'antenne, par triangulation d'émetteur tels que de téléphonie mobile) et la transmet au récepteur STB par des moyens de communication local. Dans une forme de réalisation, la communication des données échangées sont sécurisées par une encryption. La clé d'encryption peut être chargée par une connexion préalable par le téléphone intelligent à un centre de gestion durant une procédure d'initialisation. Durant cette procédure, le téléphone intelligent reçoit une invitation à identifier le récepteur par exemple en indiquant son identifiant. Le centre de gestion va rechercher dans sa base de données la clé d'encryption correspondant audit récepteur et l'envoie au téléphone intelligent. Ce dernier stocke cette clé et l'utilise pour transmettre les données de localisation à récepteur.

Le centre de gestion peut également envoyer une application qui se charge sur le téléphone intelligent et qui va gérer l'acquisition de localisation et l'envoi de ces données au récepteur. Cette application disposera de la clé personnelle du récepteur dissimulée dans l'application.

Cette opération de localisation est déclenchée par un message d'invitation transmis par le centre de gestion aux récepteurs auxquels il est connecté. Le message peut être envoyée dans le signal diffusé BS ou adressé à un récepteur via une connexion directe (par protocole IP par exemple). Ce message déclenche l'affichage d'une invitation sur l'écran demandant à l'utilisateur de transmettre une localisation courante au récepteur STB.

Le message d'invitation comprend une durée maximale qui est mémorisée par le récepteur, de préférence dans ses moyens de sécurité. Cette information permet de vérifier une durée qu'il a fallut pour obtenir une réponse du dispositif portable. Lors de la réception des données de localisation, la durée entre l'apparition du message et la réception des données est calculée et comparée à la durée maximale. Si cette durée calculée est supérieure à la durée maximale, la vérification conduit au rejet de la localisation courante.

Il peut arriver que le message d'invitation arrive à un moment inopportun et la fenêtre qui invite l'utilisateur à la vérification comporte une option de report. L'utilisateur a la possibilité par exemple de reporter cette vérification de 30 minutes. Une fois le temps écoulé et l'utilisateur disposé à effectuer la vérification, le récepteur affiche un code unique, propre audit récepteur (par exemple généré aléatoirement) qui devra être introduit dans le dispositif portable. Sans l'introduction de ce code, la localisation par le dispositif portable ne peut pas débuter. Il n'est ainsi pas possible de mettre à profit les 30 minutes de report pour déplacer le dispositif portable dans une autre zone. Une fois la localisation établie par le dispositif portable. Les données sont envoyées au récepteur avec le code unique introduit précédemment. Le récepteur peut dès lors vérifier que le code reçu est le même que celui affiché avec l'invention et calculer la durée courante. Si le code est correct et que la durée n'excède pas la durée maximale contenue dans le message, la localisation est acceptée.

Une fois cette étape franchie, le récepteur a deux options, soit faire la vérification lui-même ou déléguer cette vérification au centre de gestion.

Dans le premier cas, ceci signifie que les moyens de vérification sont contenus dans le récepteur. Ces moyens sont placés avec les moyens de sécurité. Les moyens de vérification disposent d'une mémoire contenant les données de localisation définissant au moins une zone d'autorisation. Ces données peuvent être sous la forme d'une surface définie par les positions de géo-localisation ou un set d'identifiants d'antenne dans le cas d'une localisation par identifiant d'antenne. Les moyens de vérification vérifient que la localisation courante, reçu du dispositif portable est comprise dans la zone. Dans l'affirmative, le récepteur continue à fonctionner normalement. Dans la négative, le récepteur peut prendre différente mesure tel que l'envoi d'un message à un centre de gestion (ce message comprenant l'identifiant du récepteur et le type de problème constaté), ou bloquer, limiter ou dégrader les fonctionnalités du récepteur (par exemple en bloquant les contenus HD et en laissant les contenus SD).

Afin d'effectuer cette vérification, les moyens de vérification doivent disposer de la zone d'autorisation. Ces informations peuvent être contenues dans le message d'invitation ou être déjà présent dans les moyens de vérification, par exemple chargé durant une phase d'initialisation ou par la réception d'un message de configuration tel qu'un EMM (Entitlement Management Message).

Dans le second cas, le récepteur dispose d'un moyen de communication avec le centre de gestion, par exemple par une connexion IP. La localisation courante reçue du dispositif portable est envoyée au centre de gestion avec l'identifiant du récepteur. Le centre de gestion comprend les moyens de vérification qui vont, pour l'identifiant reçu, retrouver la zone d'autorisation et vérifier si la localisation courante est comprise dans la zone.

Le centre de gestion peut prendre plusieurs mesures dans le cas ou la localisation courante est en dehors de la zone :
- marquer cet identifiant comme bloqué et ne plus envoyer les messages contenant les clés qui permettent la continuation de la réception pour ce récepteur; les clés sont périodiquement renouvelée et les récepteur doivent recevoir les nouvelles clé pour accéder au contenu, et/ou
- envoyer un message de blocage, soit par la voie de diffusion, soit par la voie IP; ce message est traité par les moyens de sécurité du récepteur qui va cesser de fournir les clés de décryption au décodeur du récepteur.

Inversement, si la localisation est à l'intérieur de la zone, le centre de gestion peut aussi envoyer un message EMM qui va renouveler la date d'expiration des droits de réception. Ce message peut être envoyé immédiatement suivant la vérification ou plus tard lorsque les clés du système d'encryption des contenus vient à changer.

### Second mode de réalisation

Ce second mode est **caractérisé en ce que** la localisation courante, acquise par le dispositif portable, est transmise directement au centre de gestion. Pour cela, le dispositif portable comporte des moyens de localisation et de communication avec le centre de gestion, par exemple par le réseau Wifi, ou 3G/4G.

Ce mode est de préférence associé à une application spécifique chargée dans le téléphone intelligent qui exécute l'opération d'acquisition de la localisation et l'envoi des données. Cette localisation est déclenchée de la même manière que précédemment, à savoir l'affichage d'un message sur l'écran. Cet affichage comporte un code qui est unique par utilisateur et par session de localisation. Plusieurs variantes de ce code unique sont prévues dans le cadre de l'invention :
- ce code est contenu dans le message d'invitation et donc généré au centre de gestion. Dans ce cas, le message est à adressage unique et donc filtré par selon l'adresse unique du récepteur. Le centre de gestion, après avoir reçu le message du téléphone intelligent comprenant le code et la localisation, peut vérifier le code reçu avec celui qu'il a envoyé au récepteur.
- ce code est généré par le récepteur et utilise une clé personnelle. Par exemple, la date et l'heure sont encryptées par cette clé et forme le code. Le centre de gestion, après avoir reçu le message du téléphone intelligent comprenant le code et la localisation, peut vérifier le code reçu en décryptant ce code avec la clé personnelle du récepteur. Cette clé est retrouvée en identifiant le téléphone intelligent et le récepteur auquel il est associé. Une fois le code décrypté, il est possible de vérifier que l'heure et la date correspondent à une fenêtre de temps suivant l'envoi du message par le centre de gestion

L'affichage de ce code peut se faire sous forme alphanumérique ou graphique. Dans ce cas ce code est sous la forme d'une image de type barre-code ou QR code, le téléphone intelligent comprenant une caméra pour lire ce code. Cette image peut contenir de nombreuses informations telles que l'identifiant du récepteur ou des moyens de sécurité, la date et/ou l'heure, un code unique. Cette image est acquise par une caméra du téléphone intelligent et convertie par ledit téléphone en un string de données. Ce string est ensuite associé aux données de localisation qui sont transmises au centre de gestion. Le centre de gestion pourra vérifier, en plus de la localisation que le string correspond à l'image affichée par le récepteur.

Le centre de gestion peut prendre plusieurs mesures dans le cas ou la localisation courante est en dehors de la zone :
- marquer cet identifiant comme bloqué et ne plus envoyer les messages contenant les clés qui permettent la continuation de la réception pour ce récepteur; les clés sont périodiquement renouvelée et les récepteur doivent recevoir les nouvelles clé pour accéder au contenu, et/ou
- envoyer un message de blocage, soit par la voie de diffusion, soit par la voie IP; ce message est traité par les moyens de sécurité du récepteur qui va cesser de fournir les clés de décryption au décodeur du récepteur.

Inversement, si la localisation est à l'intérieur de la zone, le centre de gestion peut aussi envoyer un message EMM qui va renouveler la date d'expiration des droits de réception.

### Troisième mode de réalisation

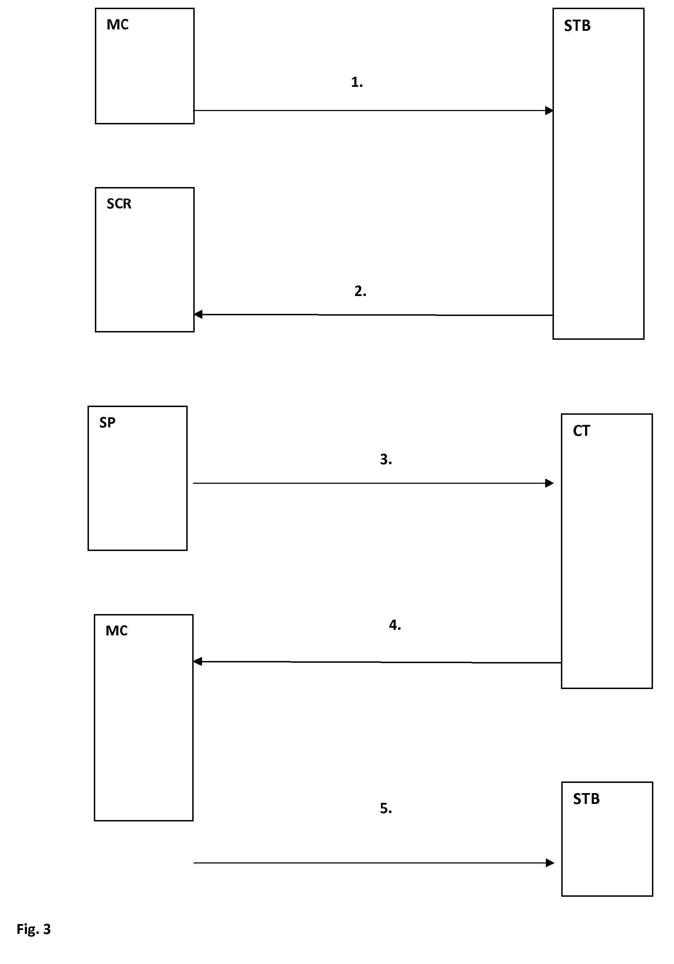

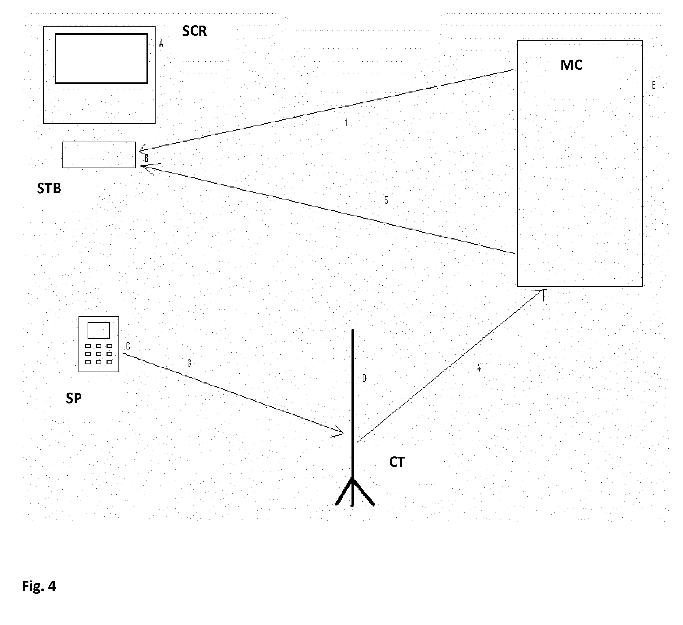

Ce troisième mode est basé sur une localisation intrinsèque d'un message reçu par le centre de gestion MC. Il est illustré par les figures 3 et 4. Il reprend toutes les explications des modes précédents concernant le mode dans lequel le dispositif portable communique directement avec le centre de gestion. A cet effet le dispositif portable peut être un simple téléphone mobile sans fonctionnalité additionnelle.

La particularité est que le dispositif portable peut être un téléphone mobile sans moyens de localisation. Il n'aura pas besoin d'acquérir sa localisation. On lui demande uniquement d'envoyer un message SMS au centre de gestion, contenant par exemple l'identifiant du récepteur ou un code d'identification affiché sur l'écran et contenu dans le message d'invitation. Cette information n'est même pas nécessaire car le centre de gestion, en connaissant le numéro de téléphone peut retrouver l'identifiant du récepteur auquel il est associé. Le code peut être produit selon les modes de réalisation décrit ci-dessus.

Le téléphone portable envoie un message 3 au centre de gestion en utilisant la plus proche tour de communication CT. La tour de communication CT relaie le message 4 au centre de gestion en ajoutant des données de services tel que l'identifiant de la tour CT.

Lors de la réception du message 4 par le centre de gestion, ce dernier extrait les données de service pour identifier la tour qui a servi de premier relais au message envoyé par le téléphone portable. Cet identifiant devient la localisation courante telle que décrite en relation avec les modes ci-dessus. Le numéro de téléphone associé au message permet de retrouver l'identifiant du récepteur et donc ses données de zone(s) d'autorisation.

Les mêmes options discutées précédemment en rapport avec la réponse du centre de gestion sont applicables ici. Le message EMM (par exemple message de blocage, ou de renouvellement) est illustré par la référence 5 sur les figures 3 et 4.

## Revendications

1. Méthode de control d'accès à du contenu diffusé à un récepteur, ledit récepteur faisant partie d'un système de contrôle géographique d'accès comprenant des moyens de vérification et des moyens de sécurité, la méthode comprenant les étapes :
- acquérir une localisation courante par un dispositif portable,
- transférer la localisation courante aux moyens de vérification,
- extraire dans une mémoire des moyens de vérification, un set de données de localisation définissant au moins une zone,
- vérification par les moyens de vérification que la localisation courante est incluse dans ladite zone, et dans l'affirmative, transmission d'un message d'autorisation de réception du contenu audiovisuel aux moyens de sécurité relatif au récepteur.

2. Méthode selon la revendication 1, **caractérisée en ce qu'**elle comprend une étape de réception par le récepteur d'un message d'invitation comprenant une commande informant l'utilisateur des opérations à effectuer.

3. Méthode selon la revendication 2, **caractérisée en ce que** le récepteur affiche un code unique, propre audit récepteur, qui est ajouté à la localisation courante transmise par le dispositif portable.

4. Méthode selon la revendication 3, **caractérisée en ce que** les moyens de vérification vérifient que le code transmis corresponde à celui affiché par ledit récepteur.

5. Méthode selon l'une des revendications 1 à 4, **caractérisée en ce que** les moyens de vérification sont intégrés audit récepteur, ledit récepteur comprenant des moyens de communication locaux avec le dispositif portable pour recevoir la localisation courante.

6. Méthode selon la revendication 5, **caractérisée en ce que** le dispositif portable est la télécommande dudit récepteur.

7. Méthode selon la revendication 5, dans laquelle les moyens de communication locaux dudit récepteur sont paramétrés avec une clé de communication, **caractérisée en ce qu'**elle comprend les étapes :
- télécharger une application dans une mémoire dudit dispositif portable,
- accéder ledit centre de gestion et identifier le récepteur auprès dudit centre de gestion,
- retrouver une clé de communication correspondant audit récepteur dans une base de données,
- transmettre par le centre de gestion la clé de communication audit dispositif portable,
- utiliser ladite clé de communication pour encrypter et/ou signer les données courantes de localisation.

8. Méthode selon l'une des revendications 1 à 4, **caractérisée en ce que** les moyens de vérification sont placés dans un centre de gestion et que le dispositif portable comprend des moyens de communications avec ledit centre de gestion indépendants du récepteur.

9. Méthode selon l'une des revendications 1 à 4, **caractérisée en ce que** les moyens de vérification sont placés dans le récepteur, et que le dispositif portable comprend des moyens de communications indépendant du récepteur avec ledit centre de gestion, ledit centre transmettant un message au dit récepteur contenant au moins la localisation reçue.

10. Méthode selon la revendication 8 ou 9, **caractérisée en ce que** le récepteur affiche une image comprenant au moins l'identifiant dudit récepteur, ladite image étant lue par un dispositif de lecture optique dudit dispositif portable et convertie en données jointes à la localisation, l'identifiant du récepteur permettant au moyens de vérification d'extraire de sa mémoire le set de données de localisation définissant au moins une zone pour ledit récepteur.

11. Méthode selon l'une des revendications 2 ou 9, **caractérisée en ce que** les moyens de vérification déterminent l'intervalle entre l'affichage du message d'invitation et la réception de la localisation courante, cet intervalle étant comparé avec un intervalle maximum validant la réception de la localisation.

12. Méthode selon l'une des revendications 3 ou 4, **caractérisée en ce que** le dispositif portable est un téléphone portable, transmettant ledit code via un SMS vers un centre de gestion comprenant les moyens de vérification, la localisation courante étant celle de l'antenne de téléphonie mobile à laquelle est connecté ledit téléphone portable, et transmis comme données de service avec le SMS au centre de gestion.
